# EUROPEAN PATENT APPLICATION

(11) **EP 0 971 152 A2**
(43) Date of publication of application: **12.01.2000**
(21) Application number: 99302592.3
(22) Date of filing: 01.04.1999
(51) Int. Cl.: F16F 7/104

(54) **Restraining link**

(30) Priority: 08.07.1998 GB 9814845
(71) Applicant: DRAFTEX INDUSTRIES LIMITED, Edinburgh EH2 3AP, Scotland (GB)
(72) Inventor: Souyri, Philippe, 44470 Carquefou (FR); Chauvet, Ludovic, 44470 Mauves sur Loire (FR)
(74) Representative: Foster, David Martyn

(57) **Abstract**

A restraining link is described for interconnection between the engine and the body of the vehicle to restrain movement towards and away from each other of the engine relative to the vehicle under conditions of substantial changes in torque or vehicle movement. The link comprises a metal arm (5) having a connector (6) incorporating resilient material (10). The material (10) secures a bush (12) which rotatably receives a pin attached to the engine or body of the vehicle. At its opposite end, the arm (5) is bifurcated to produce two fingers (5A,5B) connected to a connector (8) carrying a pin (16) for connection to the other of the engine and the body. This connector (8) contains no flexible material. However, the metal of the fingers (5A,5B) is shaped (e.g. with a channel-shape in cross-section) so as to be capable of flexing to accommodate relative movement of the engine and the vehicle body in a vertical direction by bending.

## Description

The invention relates to a restraining link for interconnection between two bodies to restrain relative movement between the two bodies in a plurality of directions respectively aligned with at least two of three orthogonal axes, comprising an arm extending between first and second connection means for respective connection to the two bodies to restrain relative movement therebetween in first and second, opposite, ones of the directions aligned with the length of the arm, the arm flexing in response to relative movement between the bodies in third and fourth, opposite, ones of the directions transverse to the arm.

Such a link is known, for example, from GB-A-2 297 136. This link is made from plastics material and has integral socket connections at each end for making respective rotary connection to the two bodies. The plastics material is stated to permit some flexing in the event of overload. In such a case, the flexing would be substantially uncontrolled. Although this would be acceptable for overload conditions, it would not be satisfactory where a link must regularly accommodate relative movement between the two bodies in directions which cause the flexing.

According to the invention, therefore, the known link is characterised in that the arm is made of material which is substantially rigid along its length and incorporates a bending part at the first said connection means for accommodating the relative movement there between the two bodies in the third and fourth directions.

Restraining links embodying the invention will now be described, by way of example only, with reference to the accompanying diagrammatic drawings in which:
Figure 1 is a plan view of one of the links;
Figure 2 is a side view looking in the direction of the arrow II of Figure 1;
Figure 3 is a section on the line III-III of Figure 1;
Figure 4 corresponds to Figure 2 but shows the link in a flexing condition;
Figure 5 and 6 correspond to Figure 3 but show modified cross-sectional shapes; and
Figure 7 is a perspective view of the link shown in Figures 1 to 4.

The restraining link comprises an arm 5 such as made of metal which extends between two connectors 6 and 8. Connector 6 comprises a rigid ring 9 rigidly fixed to the arm 5 and including a resilient mount 10 such as made of rubber which in turn supports a rigid bush 12 such as made of metal.

At its opposite end, the arm 5 is bifurcated to provide two integral re-entrant fingers 5A and 5B which are rigidly attached to a rigid ring 14. Ring 14 is rigidly and non-rotatably secured to a pin 16.

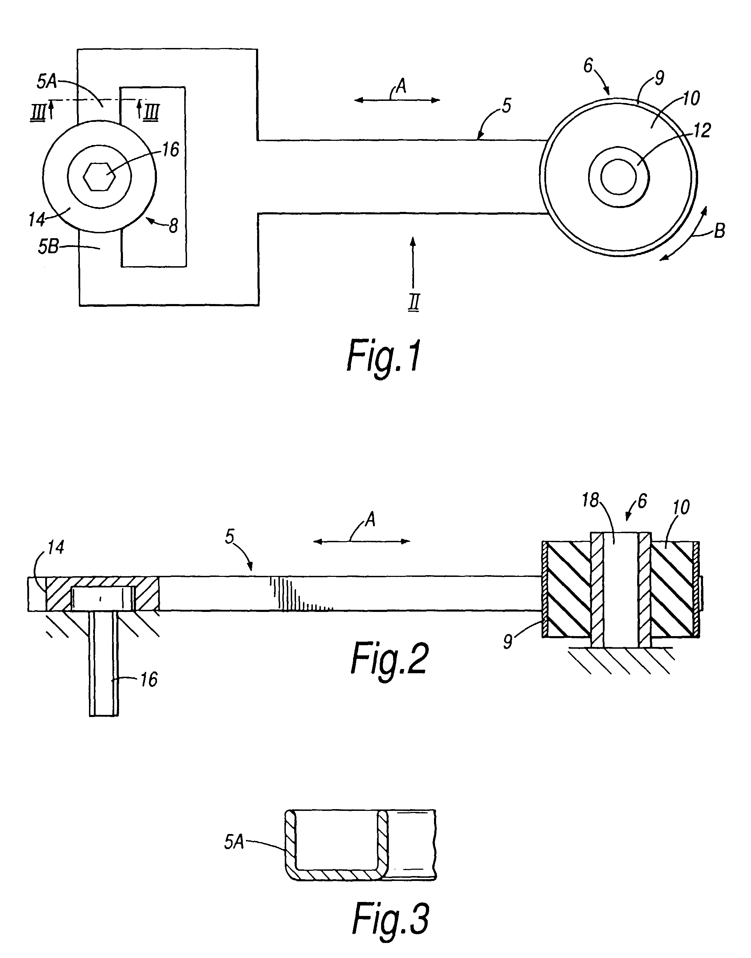

In use, and as shown in Figure 2, the bush 12 rotatably receives a pin 18 secured to the engine or body of the vehicle. By means of the pin 16, the opposite end of the arm 5 is attached to the other of the engine and the vehicle.

In use, relative movement towards and away from each other of the engine and the vehicle body, in the direction of the arrows A, is restrained and limited by the rigidity of the arm 5, but resiliently damped by the rubber material 10. Any relative movement of the engine and the body causing angular movement in the direction of the arrows B can be accommodated by angular movement of the connector 9 around the pin 18.

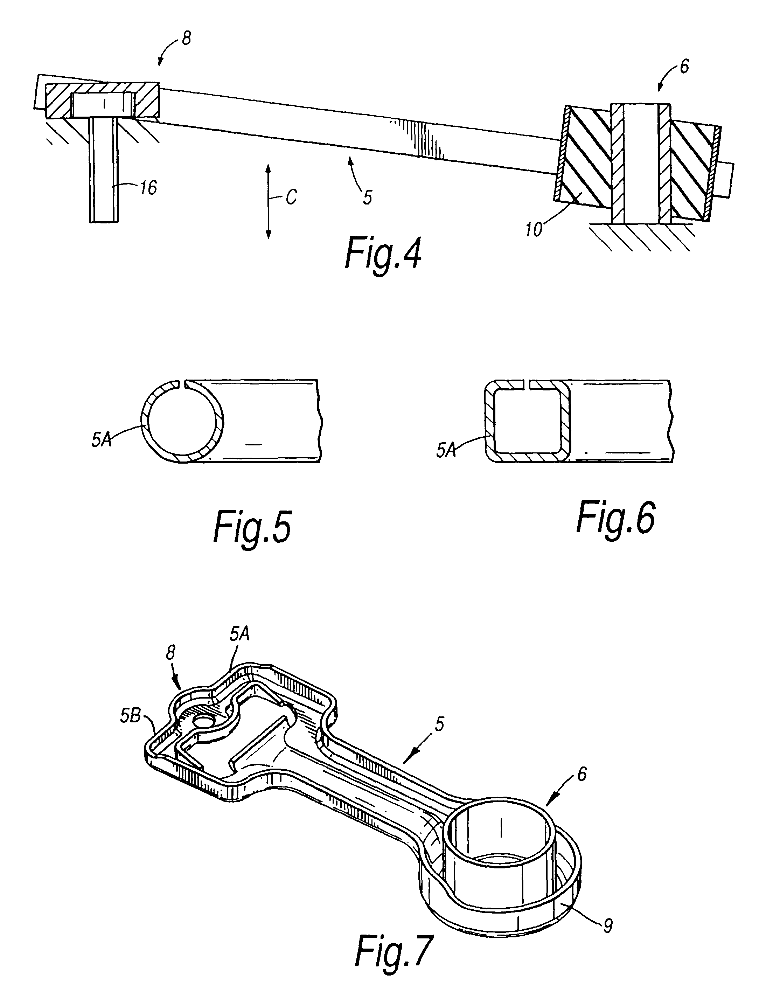

In addition, and as shown in Figure 4, it is necessary to accommodate at least slight relative movement of the engine and the body of the vehicle in the vertical direction as shown by the arrows C. Such movement is accommodated at one end of the arm 5 by the rubber material 10, as shown in Figure 4. At the opposite end of the arm 5, this movement is accommodated by bending or flexing of the metal in the region of the fingers 5A and 5B. Such flexing is facilitated by the cross-sectional shape of the fingers 5A and 5B as shown in Figure 3. However, other suitable cross-sectional shapes for the fingers are possible. The fingers are required to have such a shape that limited flexing is possible, but without reducing the rigidity of the arm 5 in the direction of the arrows A and B. Other possible cross-sectional shapes are shown, by way of example, in Figures 5 and 6. In general, any shape which embraces a space but is not completely closed around the space may be used.

In this way, it is only necessary to provide resilient material (the rubber material 10) for one of the two connectors 6,8, and the link is thus less complex and less expensive.

In a modification, the arm 5 is not bifurcated at one end into the two fingers 5A and 5B but continues in a straight line towards and is connected to the ring 16. However, at the end where it is connected to the ring 16, it is shaped and constructed to provide the same form of flexibility as is shown in Figure 4 but, again, without impairing its rigidity in the direction of the arrows A and B (Figures 1 and 2).

Preferably though not essentially, the cross-section of the arm 5 is the same along its whole length - that is, it is the same as the cross-section of the arms 5A and 5B. This is shown in Figure 7 which is a perspective view corresponding to Figures 1 to 4 but with the interior material of the connectors 6,8 omitted.

It will be appreciated, however, that modifications are possible in which the cross-section of the arm 5 (including the fingers 5A,5B) is not the same along the whole length. It is merely necessary for the arm to have, over a region somewhere along its length, a cross-section which enables it to flex sufficiently to accommodate the movement in the direction of the arrows C (Figure 4). The flexing region must be sufficiently long to enable the required flexing. The cross-section along the remainder of the arm can be more rigid.

## Claims

1. A restraining link for interconnection between two bodies to restrain relative movement between the two bodies along at least in a plurality of directions respectively aligned with at least two of three orthogonal axes, comprising an arm (5) extending between first and second connection means (6,8) for respective connection to the two bodies to restrain relative movement therebetween in first and second, opposite, ones of the directions aligned with the length of the arm (5), the arm (5) flexing in response to relative movement between the bodies in third and fourth opposite, ones of the directions transverse to the arm, characterised in that the arm (5) is made of material which is substantially rigid along its length and incorporates a bending part (5A,5B) at the first said connection means (8) for accommodating the relative movement there between the two bodies in the third and fourth directions.

2. A link according to claim 1, characterised in that the bending part (5A,5B) is integral with and of the same material as the remainder of the arm (5).

3. A link according to claim 1 or 2, characterised in that the bending part (5A,5B) connects the remainder of the arm (5) to the first connection means (8).

4. A link according to any preceding claim, characterised in that the second connection means (6) incorporates resilient material (10) for resiliently accommodating and restraining the relative movement in the first and second directions.

5. A link according to claim 4, characterised in that the resilient material (10) at the second connection means (6) resiliently accommodates relative movement there between the two bodies in the third and fourth directions.

6. A link according to any preceding claim, characterised in that the bending part (5A,5B) has a cross-section which embraces but does not completely enclose a space.

7. A link according to claim 6, characterised in that the bending part (5A,5B) has a channel-shape in cross-section.

8. A link according to claim 6, characterised in that the arm (5) comprises a main part connected to the second connection means (6) and extending longitudinally therefrom towards the first connection means (8), the main part being integrally connected to two fingers (5A,5B) having distal ends which are directed towards each other and comprise respective bending portions which constitute the bending part of the arm (5) and are connected to the first connection means (8).

9. A link according to claim 9, characterised in that the two bending portions (5A,5B) are of channel-section so as to bend by twisting relative to the remainder of the fingers.

10. A link according to any preceding claim, characterised in that at least one of the connection means (6,8) includes a rotary connection for accommodating relative movement between the bodies substantially in fifth and sixth opposite directions orthogonal to the other said directions.

11. A link according to any preceding claim, characterised in that one of the bodies is the engine of a motor vehicle and the other body is the chassis or body of the vehicle.
